# EUROPÄISCHE PATENTANMELDUNG

(11) **EP 1 351 045 A2**
(43) Veröffentlichungstag der Anmeldung: **08.10.2003**
(21) Anmeldenummer: 03005975.2
(22) Anmeldetag: 18.03.2003
(51) Int. Cl.: G01L 23/22

(54) **Verfahren und Vorrichtung zur Messung des nicht wiederholbaren Schlages an rotierenden Bauteilen**

(30) Priorität: 06.04.2002 DE 10215252
(71) Anmelder: Minebea Co., Ltd., Kitasaku-gun, Nagano-ken (JP)
(72) Erfinder: Schmid, Guido, 78098 Triberg (DE)
(74) Vertreter: Riebling, Peter, Dr.-Ing.

(57) **Zusammenfassung**

Die Erfindung betrifft ein Verfahren und eine Vorrichtung zur Messung der wiederholbaren und nicht wiederholbaren Schläge eines rotierenden Bauteils, insbesondere eines Spindelmotors, mit Hilfe mindestens eines Messsensors (3), mit dem Änderungen des Abstands zwischen Messsensor (3) und dem rotierenden Bauteil (1) in Abhängigkeit des Rotationswinkels gemessen werden. Erfindungsgemäß erfasst der Messsensor (3) in einem ersten Messzyklus ein erstes Messsignal, aus dem ein den RRO beschreibendes Signal ermittelt und gespeichert wird. In einem zweiten Messzyklus wird ein zur Amplitude und Phase des RRO-Signals proportionales Steuersignal generiert und einem den Messsensor (3) tragenden elektromechanischen Stellglied zugeführt, das in Abhängigkeit des Steuersignals den Abstand zwischen dem Messsensor (3) und dem Außenumfang des rotierenden Bauteils (1) verändert und dadurch den durch das RRO-Signal beschriebenen Schlag kompensiert, wobei der Messsensor (3) ein den NRRO beschreibendes zweites Messsignal erfasst.

## Beschreibung

Die Erfindung betrifft eine Vorrichtung und ein Verfahren zur Messung des nichtwiederholbaren Stirn- und/oder Radialschlages an rotierenden Bauteilen, insbesondere an dem Rotor eines Spindelmotors, wie er zum Beispiel zum Antrieb von Festplattenlaufwerken eingesetzt wird.

Derartige, in Festplattenlaufwerken eingesetzte Spindelmotoren dienen zum Antrieb von Magnetplatte(n), auf die mittels eines Schreib-/Lesekopfes Daten in Form von magnetisierten Bereichen geschrieben und wieder ausgelesen werden können.

Hierzu ist (sind) die Magnetplatte(n) auf dem Rotor des Spindelmotors befestigt, wobei der von einem elektromagnetischen Drehfeld angetriebenen Rotor mittels eines Lagersystems drehgelagert ist. Als Lagersysteme werden vorzugsweise Wälz- aber auf Fluidlager eingesetzt. Aufgrund von unvermeidlichen Bauteil- und Montagetoleranzen gibt es mehr oder weniger große Abweichungen zwischen der tatsächlichen und der theoretischen, zeitlichen, unveränderlichen Drehachse, so dass der Abstand zwischen Rotor oder Fläche und einem feststehenden Bezugspunkt keinen konstanten, sondern einen sich zeitlich und drehwinkelabhängig ändernden Messwert ergibt. Dies kann zu Fehlern beim Lesen und Schreiben der Daten auf die Magnetplatte und schlimmstenfalls zur Kollision des Schreib-/Lesekopfes mit der Magnetplatte führen.

Der von den Abweichungen der tatsächlichen Rotationsachse herrührende Schlag des Rotors wird in der Praxis durch die Größe RRO (Repeatable Runout) definiert, wobei zwischen RRO axial (Stirnschlag) und RRO radial (Radialschlag) unterschieden wird. Der RRO ist ein Maß für die Abweichung der tatsächlichen Drehachse infolge von Außenmittigkeit und Kippung sowie für die durch Herstellprozesse verursachten Oberflächenfehler bzw.

Formabweichungen. Der RRO liegt bei heutigen Spindelmotoren für Festplattenlaufwerke in der Größenordnung von bis zu einigen 10 µm.

Dem RRO überlagert ist der NRRO (Non Repeatable Runout), also die zufälligen bzw. stochastischen Abweichungen, die im Gegensatz zum RRO unregelmäßig auftreten, und zwar sowohl bezüglich Phasenlage als auch bezüglich ihrer Amplitude. Ursache sind Unregelmäßigkeiten, die vom Lagersystem herrühren, bei Wälzlagern beispielsweise Lager und Formabweichungen der Laufbahnen und Wälzkörper aber auch Oberflächendefekte und Durchmessertoleranzen. Der NRRO liegt bei heutigen Spindelmotoren für Festplattenlaufwerke in der Größenordnung von bis zu einigen 10 nm und ist somit um einige Größenordnungen kleiner als der RRO.

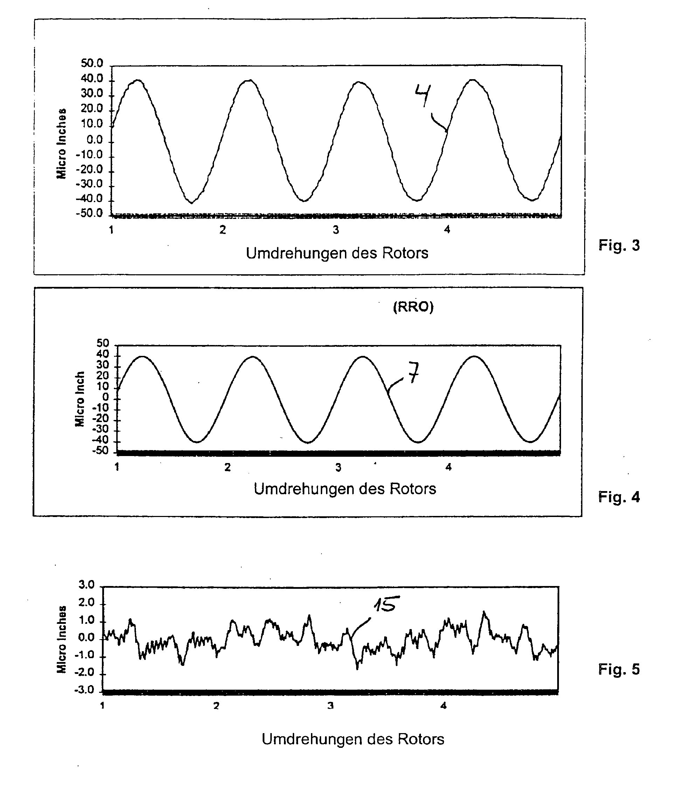

RRO und NRRO werden mit Hilfe einer entsprechenden Messeinrichtungen erfasst. Hierzu wird der Spindelmotor in eine Messstation eingespannt. Durch einen kapazitiven Messsensor wird während der Rotation des Motors der Abstand des Sensors zum Rotor in Abhängigkeit des Rotationswinkels gemessen. Aus dem Ausgangsignal des Sensors können dann RRO und NRRO direkt ermittelt werden. Der RRO beinhaltet alle Harmonischen und stellt sich grafisch aufbereitet in Form eines sinusförmigen Signals dar, während der NRRO dem Sinussignal überlagert ist. Figur 3 zeigt ein typisches Messsignal in Abhängigkeit des Umdrehungswinkels, das im wesentlichen eine Sinuskurve beschreibt, deren Periode einer Rotationsperiode des gemessenen Motors entspricht.

Da der NRRO sehr viel kleiner ist als der RRO ist auch das Messsignal des NRRO im Vergleich zum RRO sehr klein. Die Auflösung der Messeinrichtung wird anhand der maximalen Amplitude des RRO-Signals bestimmt und eingestellt, so dass die verbleibende Auflösung für das NRRO Signal verschwindend gering ist. Wird das Messsignal z.B. mit einer Auflösung von 12 Bit digitalisiert, bewegen sich die Messwerte des NRRO im Bereich der letzen 1-2 Bit. Eine genaue Messung des NRRO ist deshalb nur eingeschränkt und nur mit ungenügender Auflösung möglich.

Die Aufgabe der Erfindung besteht darin, eine Vorrichtung zur Messung der wiederholbaren und nichtwiederholbaren Schläge (RRO; NRRO) eines rotierenden Bauteils zu schaffen und ein Verfahren anzugeben, mit dem insbesondere die Bestimmung des NRRO mit wesentlich höherer Auflösung bzw. Genauigkeit ermöglicht wird.

Diese Aufgabe wird erfindungsgemäß durch die Merkmale der unabhängigen Patentansprüche gelöst.

Gemäß der Erfindung,erfasst der Messsensor in einem ersten Messzyklus ein erstes Messsignal, aus dem ein den RRO beschreibendes Signal ermittelt und gespeichert wird. In einem zweiten Messzyklus wird ein zur Amplitude und Phase des RRO-Signals proportionales Steuersignal generiert und einem den Messsensor tragenden elektromechanischen Stellglied zugeführt, das in Abhängigkeit des Steuersignals den Abstand zwischen dem Messsensor und dem Außenumfang des rotierenden Bauteils verändert und dadurch den durch das RRO-Signal beschriebenen Schlag kompensiert, wobei der Messsensor ein den NRRO beschreibendes zweites Messsignal erfasst.

Vorteilhafte Ausgestaltungen und Weiterbildungen der Erfindung sind in den abhängigen Patentansprüchen angegeben.

Der NRRO kann durch die erfindungsgemäße Kompensation bzw. Ausblendung des RRO nun mit einer Auflösung im Bereich von 1 nm bestimmt werden. Die Kompensation des RRO wird durch eine Verstelleinrichtung erreicht, welche die Position des Messsensors dynamisch verstellt und zwar derart, dass die Bewegung des Messsensors der Amplitude und Phase des aus dem ersten Messsignal gewonnenen RRO-Signals folgt. Dadurch misst der Messsensor nur noch die zufälligen, nichtwiederholbaren Abweichungen, die als NRRO definiert sind.

Die Empfindlichkeit- und/oder der Messbereich des Messsensors kann den zu erwartenden Messwerten des NRRO angepasst werden, so dass die nutzbare Auflösung der Auswerteeinrichtung voll ausgenutzt werden kann.

Bevorzugte Ausführungsbeispiele der Erfindung werden nachfolgend anhand der Zeichnungsfiguren erläutert.

Es zeigen:
- Figur 1:: ein Blockschaltbild einer ersten Ausgestaltung der Messanordnung;
- Figur 2:: ein Blockschaltbild einer zweiten Ausgestaltung der Messanordnung;
- Figur 3:: eine beispielhafte Darstellung des ersten Messsignals;
- Figur 4:: eine beispielhafte Darstellung des aus dem ersten Messsignal extrahierten RRO-Signals zur Ansteuerung des VCM für den Messsensor;
- Figur 5:: eine beispielhafte Darstellung des aus dem zweiten Messsignal extrahierten NRRO-Signals.

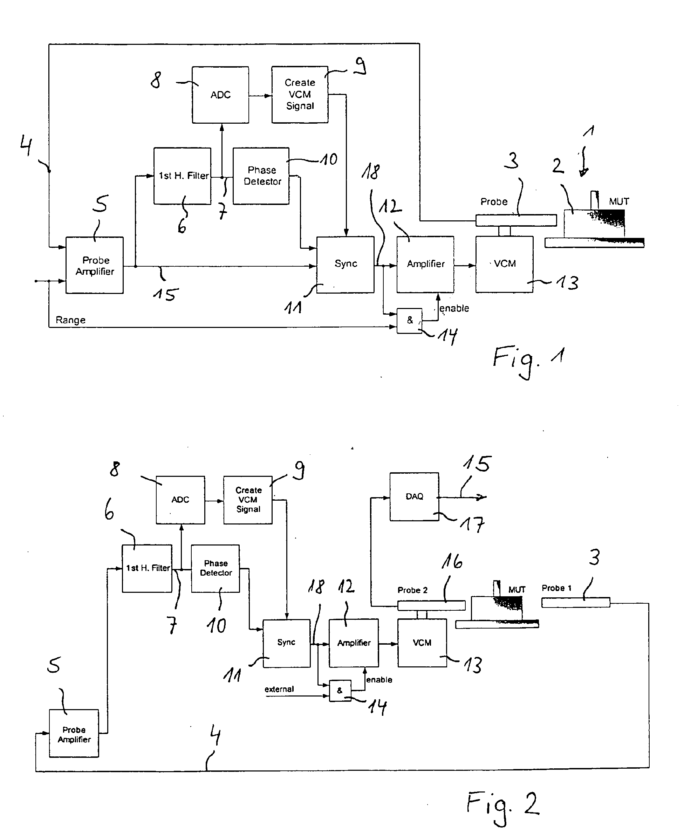

Mit der Anordnung nach Figur 1 können RRO und NRRO eines MUT 1 (Motors unter Test) bzw. des Rotors 2 des MUT 1 gemessen werden. Hierzu wird der Motor in eine Messstation eingespannt, an welcher ein kapazitiver Messsensor 3 angeordnet ist, der während der Rotation des MUT1 die Änderungen des Abstands zur Oberfläche des Rotors 2 misst und in ein elektrisches Messsignal umsetzt.

Der Messsensor 3 wird zunächst in einem fest vorgegebenen Abstand von der abzutastenden Oberfläche des Rotors 2 positioniert und ein erster Messzyklus gestartet. Der Messsensor 3 arbeitet dabei in einem ersten Messbereich, mit dem z.B. Abstandsänderungen von +/- 50 µm erfasst werden können. Der Rotor 2 des MUT 1 wird mit einer konstanten Drehzahl in Rotation versetzt, wobei es im ersten Messzyklus prinzipiell ausreicht, eine einzige Umdrehung des Rotors 2 zu messen.

Das Messsignal 4 wird einem Verstärker 5 zugeführt, dort verstärkt und kann am Ausgang des Verstärkers abgenommen und weiterverarbeitet werden. Das Messsignal 4 beinhaltet den RRO und den diesen überlagernden NRRO und ähnelt einer Sinusschwingung, deren Frequenz der Rotationsfrequenz des Rotors 2 entspricht.

Vom Ausgang des Verstärkers 5 wird das Messsignal 4 einem Filter 6 zugeführt, der nur die Grundschwingung des Messsignals durchlässt und die Oberschwingungen herausfiltert. Hierfür kann z.B. ein Tiefpassfilter verwendet werden. Das vom Tiefpassfilter 6 kommende Signal 7 beschreibt den RRO (RRO-Signal) in Abhängigkeit des Rotationswinkels des Rotors 2. Das RRO-Signal ist in Figur 4 dargestellt.

Um den NRRO mit großer Genauigkeit bestimmen zu können, wird das RRO-Signal 7 einem A/D-Wandler 8 zugeführt, digitalisiert und in einer Speichereinheit 9 abgespeichert. Das RRO-Signal 7 wird außerdem einem Phasendetektor 10 zugeführt, der an seinem Ausgang ein Phasensignal ausgibt, aus welchem z.B. die Nulldurchgänge des RRO-Signals abgeleitet werden können.

In einer Synchronisationseinrichtung 11 wird das in der Speichereinrichtung abgespeicherte RRO-Signal 7 auf die aktuelle Phasenlage des anliegenden Messsignals 4 synchronisiert, d.h. das gespeicherte Signal 7 wird synchron zur aktuellen Phasenlage des Rotors 2 aus der Speichereinrichtung 9 ausgelesen. Die Synchronisationseinrichtung 11 gibt ein zur Amplitude und Phasenlage des RRO-Signals 7 proportionales Steuersignal 18 aus.

Das synchronisierte Steuersignal 18 wird einem Verstärker 12 zugeführt, dessen Ausgangssignal ein elektromechanisches Stellglied 13 ansteuert. Sobald das synchrone Steuersignal 18 anliegt, wird über ein Verknüpfungsglied 14 ein zweiter Messzyklus vorzugsweise automatisch gestartet, indem der Ausgang des Verstärkers 12 freigeschaltet und das Steuersignal 18 auf das Stellglied 13 geführt wird.

Das Stellglied 13 ist vorzugsweise ein sogenannter Voice Coil Motor VCM (Schwingspulenmotor), der sehr schnelle und exakte Stellbewegungen im µm-Bereich zulässt. Der Messsensor 3 ist auf dem Stellglied 13 angeordnet, so dass dessen Position in Richtung senkrecht zu der zu messenden Oberfläche des Rotors 2 verstellt werden kann.

Dem Steuersignal 18 folgend wird der VCM 13 und der mit diesem verbundene Messsensor 3 phasenrichtig dem durch das RRO-Signal 7 beschriebenen Schlag des Rotors 2 nachgeführt. Der Messsensor 3 wird nun in einem empfindlicheren, zweiten Messbereich betrieben, mit dem z.B. Abstandsänderungen von +/- 2 µm erfasst werden können, und führt Abstandsmessungen durch, während er dem Verlauf des RRO-Signals 7 nachgeführt wird. Dadurch werden die vom RRO herrührenden Abstandsänderungen im aktuell erfassten, zweiten Messsignal ausgeblendet. Das zweite Messsignal 15 entspricht dem das RRO-Signal überlagerte NRRO-Signal. Aufgrund des empfindlichen Messbereichs kann das NRRO-Signal 15 sehr genau gemessen werden. Figur 5 zeigt einen typischen Verlauf eines NRRO-Signals in Abhängigkeit des Umdrehungswinkels des Rotors.

Figur 2 zeigt eine andere, mögliche Ausgestaltung der Messanordnung. Der wesentliche Unterschied zur Anordnung gemäß Figur 1 ist, dass zwei Messsensoren 3 und 16 verwendet werden, wobei der erste Messsensor 3 in einem ersten Messbereich betrieben wird und den RRO erfasst, während der zweite Messsensor 16 in einem zweiten, empfindlicheren Messbereich betrieben wird und den NRRO erfasst.
Der erste Messsensor 3 ist relativ zum MUT fest positioniert. Aus dem gewonnenen Messsignal wird das RRO-Signal extrahiert in der selben Weise, wie es im Zusammenhang mit dem ersten Messzyklus in Verbindung mit Figur 1 beschrieben wurde.

Der zweite Messsensor 16 ist in seiner relativen Position verstellbar auf dem VCM 13 angeordnet und wird in oben beschriebener Weise dem Verlauf des RRO-Signals 7 nachgeführt, das vom ersten Messsensor 3 fortlaufend erfasst wird. Somit erfasst der zweite Messsensor ausschließlich das NRRO-Signal 15, das durch einen Verstärker 17 verstärkt und ausgegeben wird.

Im Unterschied zum ersten Ausführungsbeispiel gemäß Figur 1 muss der MUT 1 bei dieser Messanordnung nicht mit einer konstanten Drehzahl betrieben werden, da die Position des zweiten Messsensors 16 durch das vom ersten Messsensors 3 ständig erfasste RRO-Signal 7 in Echtzeit nachgeregelt wird. Je nach gegenseitiger Positionierung der Messsensoren 3, 16 am Außenumfang des Rotors 2 des MUT 1 muss bei der Positionsnachführung des zweiten Messsensors 16 die dadurch hervorgerufene Phasenverschiebung zwischen RRO-Signal 7 und dem Steuersignal 18 für den VCM 13 beachtet werden.

### Bezugszeichenliste

- 1: Motor unter Test (MUT)
- 2: Rotor
- 3: Messsensor
- 4: Messsignal (erstes)
- 5: Verstärker
- 6: Filter
- 7: RRO-Signal
- 8: A/D-Wandler
- 9: Speichereinheit
- 10: Phasendetektor
- 11: Synchronisationseinrichtung
- 12: Verstärker
- 13: Stellglied (VCM)
- 14: Verknüpfungsglied
- 15: Messsignal (zweites)
- 16: Messsensor
- 17: Verstärker
- 18: Steuersignal

## Patentansprüche

1. Verfahren zur Messung der wiederholbaren und nicht wiederholbaren Schläge eines rotierenden Bauteiles, insbesondere des Rotors eines Spindelmotors, mit Hilfe mindestens eines Messsensors (3), mit dem Änderungen des Abstands zwischen Messsensor und dem rotierenden Bauteil (2) in Abhängigkeit des Rotationswinkels gemessen werden, **dadurch gekennzeichnet,**
**dass** in einem ersten Messzyklus:
der Messsensor (3) ein erstes Messsignal (4) erfasst, und aus dem ersten Messsignal ein den RRO beschreibendes Signal (7) ermittelt und gespeichert wird,
**dass** in einem zweiten Messzyklus:
ein zur Amplitude und Phase des RRO-Signals (7) proportionales Steuersignal (18) generiert und einem den Messsensor (3) tragenden elektromechanischen Stellglied (13) zugeführt wird, das in Abhängigkeit des Steuersignals den Abstand zwischen dem Messsensor (3) und dem Außenumfang des rotierenden Bauteils (2) verändert und dadurch den durch das RRO-Signal (7) beschriebenen Schlag kompensiert, wobei der Messsensor ein den NRRO beschreibendes zweites Messsignal erfasst.

2. Verfahren nach Anspruch 1, **dadurch gekennzeichnet, dass** der Messsensor (3) während des ersten Messzyklus in einer fest vorgegebenen Position zum Außenumfang des rotierenden Bauteils (2) des Motors (1) positioniert wird.

3. Verfahren nach Anspruch 1 oder 2, **dadurch gekennzeichnet, dass** das erste Messsignal (4) gefiltert, gespeichert und mit dem aktuellen Rotationswinkel des rotierenden Bauteils synchronisiert wird und daraus das Steuersignal (18) zur Ansteuerung des Stellglieds abgeleitet wird.

4. Verfahren nach einem der vorhergehenden Ansprüche, **dadurch gekennzeichnet, dass** der Messsensor (3) während des ersten Messzyklus in einem ersten Messbereich und während des zweiten Messzyklus in einem zweiten Messbereich betrieben wird.

5. Verfahren nach einem der vorhergehenden Ansprüche, **dadurch gekennzeichnet, dass** zwei Messsensoren (3; 16) verwendet werden, wobei ein Messsensor (3) das erste Messsignal (4) und der andere Messsensor (16) das zweite Messsignal (15) erfasst.

6. Vorrichtung zur Messung der wiederholbaren und nichtwiederholbaren Schläge eines rotierenden Bauteils (2), insbesondere des Rotors eines Spindelmotors, welche umfasst:
mindestens einen Messsensor (3), der in relativer Nähe zum Außenumfang des Rotors (2) des Motors (1) angeordnet ist und mit dem Abstandsänderungen zur Oberfläche des rotierenden Bauteils (2) in Abhängigkeit vom Rotationswinkel gemessen werden,
**gekennzeichnet durch**:
ein den Messsensor (3) tragendes elektromechanisches Stellglied (13), mittels dem der Abstand zwischen dem Messsensor (3) und dem Außenumfang des rotierenden Bauteils (2) in Abhängigkeit eines zuvor erfassten ersten Messsignals (4) veränderbar ist, und einer internen oder extern angeschlossenen Auswerteeinrichtung zum Speichern der vom Messsensor (3) erfassten Messsignale (4; 15) und zum Ermitteln des RRO und des NRRO aus den Messsignalen.

7. Vorrichtung nach Anspruch 6, **dadurch gekennzeichnet, dass** der Messsensor (3) zwei vorwählbare und/oder umschaltbare Messbereiche umfasst.

8. Vorrichtung nach Anspruch 6 oder 7, **dadurch gekennzeichnet, dass** der Messsensor (3) ein kapazitiver Messsensor ist.

9. Vorrichtung nach einem der Ansprüche 6 bis 8, **dadurch gekennzeichnet, dass** das Stellglied (13) ein Voice Coil Motor VCM ist.

10. Vorrichtung nach einem der Ansprüche 6 bis 8, **dadurch gekennzeichnet, dass** zwei Messsensoren (3; 16) verwendet werden, die in einem gegenseitigen Abstand am Außenumfang des rotierenden Bauteils (2) des Motors (1) angeordnet sind.
